# EUROPEAN PATENT APPLICATION

(11) **EP 4 216 675 A1**
(43) Date of publication of application: **26.07.2023**
(21) Application number: 22153075.1
(22) Date of filing: 25.01.2022
(51) Int. Cl.: H05B 47/175, H05B 47/19

(54) **LIGHT SENSOR BASED COMMISSIONING OF LIGHTING SYSTEMS**

(71) Applicant: Tridonic Portugal, Unipessoal Lda, 4400-676 Villa Nova de Gaia (PT)
(72) Inventor: Severinkangas, Kari, 6850 Dornbirn (AT); Sousa, Antonio, 6850 Dornbirn (AT); Azevedo, João, 6850 Dornbirn (AT); Filipe, Jorge, 6850 Dornbirn (AT); Silva, Carlos, 6850 Dornbirn (AT)
(74) Representative: Rupp, Christian

(57) **Abstract**

Disclosed is a method (1) of commissioning of a plurality of luminaires (2). The respective luminaire (2) comprises a light sensor (21), and means (22) for communication to a central device (3). The method (1) comprises predefining (11) a commissioning sequence (41) of the plurality of luminaires (2) in a building layout plan (4); modulating (12) a light input of the light sensor (21) of the respective luminaire (2) in accordance with the predefined commissioning sequence (41); informing (13) the central device (3) of the light input modulation of the respective luminaire (2) using a network address of the respective luminaire (2); and associating (14) the network address and the respective luminaire (2) in the building layout plan (4) in accordance with the predefined commissioning sequence (41). This makes sensor-based luminaire commissioning more straightforward.

## Description

### Technical Field

The present disclosure relates to luminaire commissioning in lighting systems, and in particular to a method of commissioning of a plurality of luminaires, and to a corresponding lighting system.

### Background Art

Luminaire commissioning, i.e., the process of assuring that the luminaires of a lighting system of a building or industrial plant are installed and addressable as planned, usually requires technicians to navigate between and within rooms and to interact with the respective luminaire using a commissioning device such as a handheld phone or using light modulation means.

For example, WO 2017/036747 A1 discloses sensor-based luminaire commissioning using a commissioning device.

For example, EP 2 364 574 B1 discloses sensor-based luminaire commissioning using light modulation means. More specifically, the patent document discloses a central unit advertising an address to be assigned over a lighting control bus, a technician allocating the advertised address to a respective luminaire by modulating a light input on a light sensor of the respective luminaire, and the central unit detecting a completed address allocation via bus feedback. In summary, a system-centric commissioning process is disclosed.

### Summary

In view of the background art, the present disclosure is aimed at providing a more straightforward sensor-based luminaire commissioning.

The objective is achieved by the embodiments as defined by the appended independent claims. Preferred embodiments are set forth in the dependent claims and in the following description and drawings.

A first aspect of the present disclosure relates to a method of commissioning of a plurality of luminaires. The respective luminaire comprises a light sensor, and means for communication to a central device. The method comprises predefining a commissioning sequence of the plurality of luminaires in a building layout plan; modulating a light input of the light sensor of the respective luminaire in accordance with the predefined commissioning sequence; informing the central device of the light input modulation of the respective luminaire using a network address of the respective luminaire; and associating the network address and the respective luminaire in the building layout plan in accordance with the predefined commissioning sequence.

The light sensor may comprise an ambient light sensor.

The central device may comprise one of: a network edge device of the plurality of luminaires, and a cloud server device reachable via the network edge device.

The means for communication may comprise wireless communication means.

The means for communication may comprise wireline communication means.

The wireline communication means may comprise a lighting control bus.

The building layout plan may comprise an identifier and a position of the respective luminaire.

The position of the respective luminaire may comprise one of: a relative position, and an absolute position.

The predefining the commissioning sequence may comprise automatically predefining the commissioning sequence in accordance with obstructions in the building layout plan.

The modulating the light input of the light sensor of the respective luminaire may comprise directing a light source onto the light sensor.

The modulating the light input of the light sensor of the respective luminaire may comprise shading the light sensor.

The associating the network address and the respective luminaire may comprise associating the network address and the identifier of the respective luminaire.

The method may further comprise indicating a commissioning success by the respective luminaire.

A second aspect of the present disclosure relates to a lighting system, comprising a plurality of luminaires, respectively comprising a light sensor, and means for communication to a central device, and being configured for commissioning according to a method of the first aspect or any of its implementations.

The lighting system may further comprise the central device.

The technical effects and advantages described in relation with the method of the first aspect equally apply to the lighting system of the second aspect being configured for commissioning according to the method of the first aspect.

### Brief Description of Drawings

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.
- FIG. 1: illustrates a lighting system in accordance with the present disclosure;
- FIG. 2: illustrates a method of commissioning of a plurality of luminaires in accordance with the present disclosure; and
- FIG. 3: illustrates a building layout plan in accordance with the present disclosure;

### Detailed Descriptions of Drawings

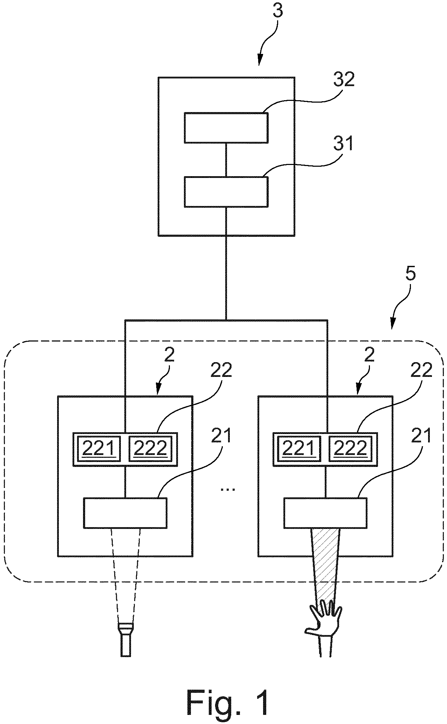

FIG. 1 illustrates a lighting system 5 in accordance with the present disclosure.

As indicated by the dashed outline, the lighting system 5 at least comprises a plurality of luminaires 2. In particular, the respective luminaire 2 of the plurality of luminaires 2 may comprise an LED-based light source.

The respective luminaire 2 comprises a light sensor 21. In particular, the light sensor 21 may comprise an ambient light sensor configured to sense an ambient light level of the respective luminaire 2.

A sensor as used herein may refer to a component of a lighting system being configured to provide sensor readings. A light sensor is accordingly configured to provide sensor readings in terms of light levels.

FIG. 1 further indicates that a light input of the light sensor 21 may be modulated. For example, this may comprise directing 121 a light source onto the light sensor 21 as is indicated in connection with the leftmost luminaire 2, and/or shading 122 of the light sensor 21 as is indicated in connection with the rightmost luminaire 2.

The respective luminaire 2 further comprises means 22 for communication to a central device 3, which may in turn include wireless communication means 221 such as a Bluetooth-enabled radio interface, a Bluetooth Low Energy (BLE)-enabled radio interface etc., and/or wireline communication means 222 such as a lighting control bus, for example a Digital Addressable Lighting Interface (DALI) bus.

The lighting system 5 may further comprise the central device 3. The central device 3 may include one of: a network edge device 31 of the plurality of luminaires 2, and a cloud server device 32 reachable via the network edge device 31.

A network edge device or (network) gateway as used herein may refer to a network device located at a network edge of a lighting system and interfacing with an external network, such as a building network or the Internet.

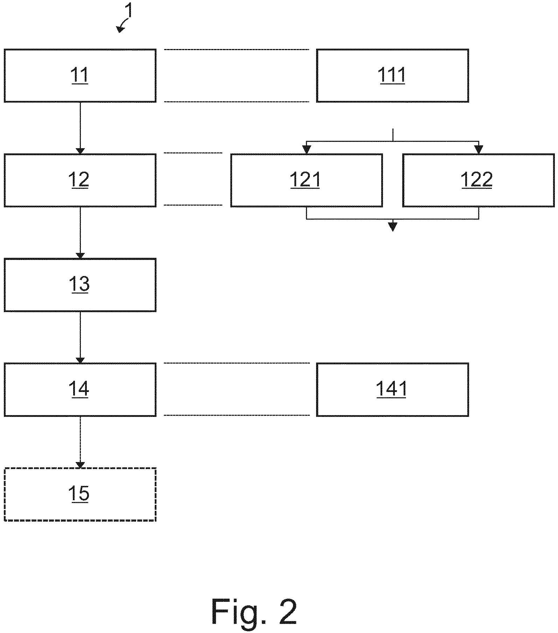

The luminaires 2 of the plurality of luminaires 2 are respectively configured for commissioning according to a method 1 of the first aspect or any of its implementations, as will be described in more detail in connection with FIG. 2 below.

FIG. 2 illustrates a method 1 of commissioning of a plurality of luminaires 2 in accordance with the present disclosure.

The method 1 implies the plurality of luminaires 2 as described in more detail in connection with FIG. 1 above.

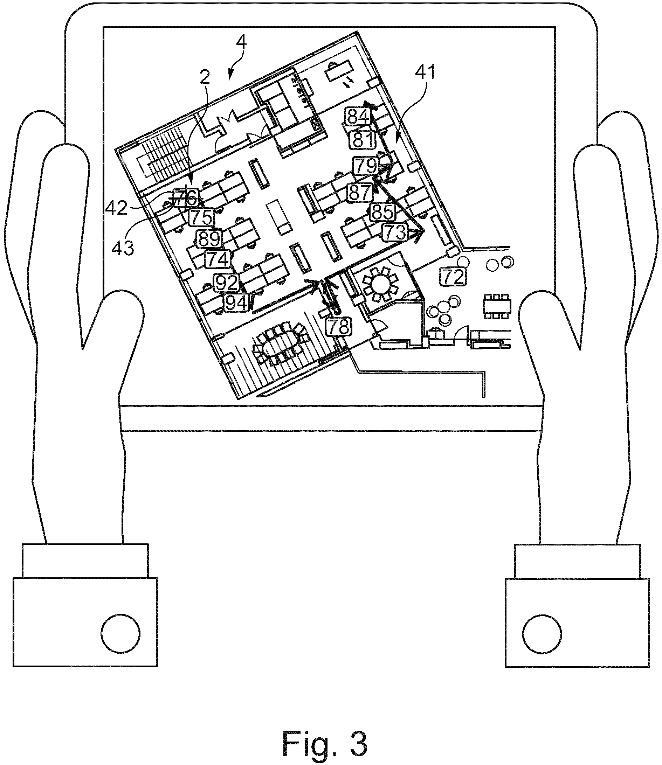

The method 1 comprises a step of predefining 11 a commissioning sequence 41 of the plurality of luminaires 2 in a building layout plan 4, which will be described in more detail in connection with FIG. 3 below.

In particular, the predefining 11 may comprise automatically predefining 111 the commissioning sequence 41 in accordance with obstructions 44 in the building layout plan 4, as will be described in more detail in connection with FIG. 3 below.

The method 1 further comprises a step of modulating 12 a light input of the light sensor 21 of the respective luminaire 2 in accordance with the predefined commissioning sequence 41. In other words, the technician may visit the plurality of luminaires 2 in the order defined by the commissioning sequence 41 in accordance with the building layout plan 4.

As already mentioned in connection with FIG. 1, the modulating 12 may comprise directing 121 a light source onto the light sensor 21, such as by pointing a light output of an electric torch onto the light sensor 21 of the respective luminaire 2. Alternatively or additionally, the modulating 12 may comprise shading 122 the light sensor 21, such as by holding a hand in between an ambient light source (not shown) and the light sensor 21.

The method 1 further comprises a step of informing 13 the central device 3 of the light input modulation of the respective luminaire 2 using a network address of the respective luminaire 2. Thereby, the central device 3 obtains sensor notifications from each of the plurality of luminaires 2 in the order defined by the commissioning sequence 41.

The network address may have been assigned to the respective luminaire 2 during manufacture, for example.

The method 1 further comprises a step of associating 14 the network address and the respective luminaire 2 in the building layout plan 4 in accordance with the predefined commissioning sequence 41, in particular by associating 141 the network address and an identifier 42 of the respective luminaire 2 comprised in the building layout plan 4. For example, the identifier 42 may be a numeric value that is unique among the plurality of luminaires 2.

As the commissioning sequence 41 is predefined and known, the sensor notifications (including respective network addresses) from each of the plurality of luminaires 2 (i.e., real devices) can be linked to the corresponding symbols (i.e., virtual devices) in the building layout plan 4, which in turn are respectively associated with corresponding identifiers 42 and positions 43.

In summary, the technician may make the luminaires 2 enter into commissioning mode one after another, following a real-world path/route across the building or at least a floor, which path/route is known by the central device 3 that also receives the commissioning activation information from the respective luminaire 2 upon light input modulation.

For the sake of completeness, the method 1 may further comprise indicating 15 a commissioning success by the respective luminaire 2. For example, the indicating 15 may be achieved by illuminating a light source of the respective luminaire 2, such as at least one light emitting device (LED).

FIG. 3 illustrates a building layout plan 4 in accordance with the present disclosure.

The building layout plan 4 may be hosted and maintained by the central device 3, and may be accessed by a technician responsible for the commissioning. For example, a tablet device having network connectivity to the central device 3 may be used to access the building layout plan 4, as is indicated in FIG. 3.

The building layout plan 4 comprises the plurality of luminaires 2, which may respectively be indicated by luminaire symbols (e.g., boxes), and may comprise an identifier 42 and a position 43 of the respective luminaire 2. According to the example of FIG. 3, the identifier 42 of the respective luminaire 2 may be represented by the numeric value of the corresponding luminaire symbol, and the position 43 of the respective luminaire 2 may be represented by the position of the corresponding luminaire symbol within the building layout plan 4.

The position 43 of the respective luminaire 2 may comprise one of: a relative position, and an absolute position. In other words, in the building layout plan 4 the respective luminaires 2 have their absolute positions or their positions relative to one another defined.

Luminaires 2 that need to be commissioned may be selected by the technician or by the central
device 3 in a particular selection order that may be termed the commissioning sequence 41.

That is to say, the technician may be enabled to manually predefine the commissioning sequence 41, for example via the above-mentioned tablet device.

Alternatively, the commissioning sequence 41 may be automatically predefined 111 in accordance with obstructions 44 in the building layout plan 4, such as walls, chasms or immobile furniture. For example, the plurality of luminaires 2 may be connected by an arbitrary path/route, such as a shortest possible route that visits each of the plurality of luminaires 2 exactly once (i.e., in accordance with a solution to the known travelling salesman problem), wherein the path/route is not allowed to touch any of the obstructions 44. Thereby, sensor-based luminaire commissioning may be automated and made more straightforward.

As shown in FIG. 3, the building layout plan 4 may further comprise the resulting commissioning sequence 41 for use by the technician in the commissioning procedure.

## Claims

1. A method (1) of commissioning of a plurality of luminaires (2),
the respective luminaire (2) comprising
a light sensor (21), and
means (22) for communication to a central device (3);
the method (1) comprising
- predefining (11) a commissioning sequence (41) of the plurality of luminaires (2) in a building layout plan (4);
- modulating (12) a light input of the light sensor (21) of the respective luminaire (2) in accordance with the predefined commissioning sequence (41);
- informing (13) the central device (3) of the light input modulation of the respective luminaire (2) using a network address of the respective luminaire (2); and
- associating (14) the network address and the respective luminaire (2) in the building layout plan (4) in accordance with the predefined commissioning sequence (41).

2. The method (1) of claim 1,
the light sensor (21) comprising an ambient light sensor.

3. The method (1) of claim 1 or claim 2,
the central device (3) comprising one of:
- a network edge device (31) of the plurality of luminaires (2), and
- a cloud server device (32) reachable via the network edge device (31).

4. The method (1) of any one of the preceding claims,
the means (22) for communication comprising wireless communication means (221).

5. The method (1) of any one of the preceding claims,
the means (22) for communication comprising wireline communication means (222).

6. The method (1) of claim 5,
the wireline communication means (222) comprising a lighting control bus.

7. The method (1) of any one of the preceding claims,
the building layout plan (4) comprising an identifier (42) and a position (43) of the respective luminaire (2).

8. The method (1) of claim 7,
the position (43) of the respective luminaire (2) comprising one of:
- a relative position, and
- an absolute position.

9. The method (1) of any one of the preceding claims,
predefining (11) the commissioning sequence (41) comprising
- automatically predefining (111) the commissioning sequence (41) in accordance with obstructions (44) in the building layout plan (4).

10. The method (1) of any one of the preceding claims,
modulating (12) the light input of the light sensor (21) of the respective luminaire (2) comprising
- directing (121) a light source onto the light sensor (21).

11. The method (1) of any one of the preceding claims,
modulating (12) the light input of the light sensor (21) of the respective luminaire (2) comprising
- shading (122) the light sensor (21).

12. The method (1) of any one of the preceding claims,
associating (14) the network address and the respective luminaire (2) comprising
- associating (141) the network address and the identifier (42) of the respective luminaire (2).

13. The method (1) of any one of the preceding claims, further comprising
- indicating (15) a commissioning success by the respective luminaire (2).

14. A lighting system (5), comprising
a plurality of luminaires (2),
respectively comprising a light sensor (21), and means (22) for communication to a central device (3); and
being configured for commissioning according to a method (1) of any one of the preceding claims.

15. The lighting system (5) of claim 14, further comprising
the central device (3).
